# EUROPEAN PATENT APPLICATION

(11) **EP 3 263 440 A1**
(43) Date of publication of application: **03.01.2018**
(21) Application number: 16754795.9
(22) Date of filing: 01.02.2016
(51) Int. Cl.: B63B 49/00, H04W 84/18, H04W 88/16

(54) **SYSTEM PROVIDING MULTIPLE SERVICES USING SENSORS WITH CENTRAL CONTROL UNIT FOR VESSELS**

(30) Priority: 26.02.2015 ES 201530249
(71) Applicant: De La Serna Parada, Alberto, 48990 Getxo (ES); Martin Mellado Miguel Ángel, 48990 Getxo Bizkaia (ES); Ugalde Ibañez, Carlos Javier, 48990 Getxo Bizkaia (ES)
(72) Inventor: De La Serna Parada, Alberto, 48990 Getxo (ES); Martin Mellado Miguel Ángel, 48990 Getxo Bizkaia (ES); Ugalde Ibañez, Carlos Javier, 48990 Getxo Bizkaia (ES)
(74) Representative: Izquierdo Blanco, Maria Alicia
(86) International application number: PCT/ES2016/070056
(87) International publication number: WO 2016/135357

(57) **Abstract**

A multiple services system through sensors having a central monitoring unit for vessels, consisting of a central monitoring unit (2) and a set of sensors (3) being connected to each other in a wireless way, and being susceptible to establish communication through the central monitoring unit (2) with a remote user (10)

## Description

### Field of the invention

This invention relates to a multiple services system through sensors having a central monitoring unit for vessels using a set of sensors to detect different defects in the vessel where they are installed, and inform the remote user of said defects occurring in the vessel.

### Background art

Currently and referring to the state of the art, the use of sensors to detect defects and/or wrong working connected to a central monitoring unit, which inform a remote device of said warnings through known communications systems, is usual and known in the multiple services systems through sensors having a central monitoring unit for vessels. However, said marketed systems have several problems hindering the use and installation.

Firstly, it is common that the connection between the sensors for defects detection and the central monitoring unit is through a wiring circuit, which limits the sensors installation and hinders its arrangement in endangered areas such as the bilge or the engine of a vessel. In addition, many wiring systems are connected through USB connectors, which may not be appropriate in sea environments since their lifetime may be very short in such environments. There may be some systems having wireless connections between sensors and the central monitoring unit based on the use of RFID, having the disadvantage of a high energy consumption, since they must be constantly supplied. Thus, such systems require the installation of an external power source and, therefore, the implementation of such system becomes highly expensive.

Secondly, some multiple services systems through sensors having a central monitoring unit for vessels being marketed incorporate a SIM card of a telephone operator to establish communication between the vessel and the remote user. Through the use of a communication system via GSM such as the used by SIM cards of telephone operators, a loss of communication may be usual when there is not coverage of the telephone operator the SIM card is linked to, wherein the information related to the vessel the multiple services system is linked to may be isolated and the defects in the vessel may not be reported to the remote user.

On the other hand, the central monitoring units of the multiple services systems include a tracking system employing, generally, the coverage of the telephone operators to carry out such tracking. This way of tracking is likely not to work properly in areas where the coverage is little and provides a loss of accuracy compared to other known tracking systems.

Lastly, the marketed multiple services systems comprise a central monitoring unit and an external communication unit, each being in different devices. This arrangement consisting of a communication unit being independent of the central monitoring unit provides an undue size of the multiple services system, instead of compact devices.

### Explanation of the invention and advantages

In view of the above mentioned, this invention relates to a multiple services system through sensors having a central monitoring unit and a set of sensors being connected to each other in a wireless way, and susceptible to establish communication with the remote user through the central monitoring unit.

Thanks to this configuration comprising the multiple services system through sensors having a central monitoring unit for vessels, the implementation thereof is provided since the wiring between the set of sensors and the central monitoring unit is not required to collect the information being transmitted by said set of sensors. Additionally, the wireless connections reduces the costs of implementations, since the wiring in certain areas of the vessel, such as, for example the bilge or engine requires difficult and complex operations. The fact that the wires are not required to connect the set of sensors with the central monitoring unit makes the multiple services system be movable from one vessel to other and be easy to be set by the user.

Another feature of this invention is that the set of sensors includes at least one sensor for water detection in the bilge, one sensor for the level of battery charge, one sensor for the level of the current, one sensor for smoke detection, one sensor for gas detection and/or one presence sensor.

Thanks to this system, varied information may be known through the different sensors being linked to the central monitoring unit. Such information may be described as follows:
- the sensor for water detection in the bilge provides information about the level of water being housed in this area of the vessel, and it may be possible to act according to the received information.
- the sensor for the level of battery charge provides information about the charge thereof and prevents a possible discharge.
- the sensor of level of the current provides information about an external current, such as, for example, the one coming from the jetty when the vessel is in the port.
- the sensor for smoke detection allows the prevention of a possible fire in the vessel.
- the sensor for gas detection allows the prevention of a gas leak in the vessel provoking disastrous consequences, such as explosion or intoxication.
- the presence sensor allows the acknowledgment of unauthorized personnel in the vessel and the prevention of a possible robbery or tampering of the vessel.

Another feature of this invention is that the transmission of data between the central monitoring unit and a remote user may be carried out through communication by radiofrequency using the network SIGFOX in the frequency 868, for example, o communication via 3G/GPRS.

Through said configuration, it may be possible to establish communication and transmission of the information related to the vessel, collected by the set of sensors, through two channels such as the communication through radiofrequency and the connection via 3G/GPRS. Typically, such multiple services system through sensors having a central monitoring unit uses radiofrequency as the main means for transmission. However, in case of not establishing any connection through radiofrequency, the secondary communication channel, the channel 3G/GPRS, is activated by a SIM card including the central monitoring unit and allows the transmission of information from the central monitoring unit to one remote user. It may be useful to note that, in order to establish communication via 3G/GPRS, multi-operator SIM cards are used and said cards are able to connect to different mobile operators according to the companies being contracted, both nationally and internationally.

Another feature of the invention comprises the central monitoring unit being susceptible to link with the set of sensors through the Low Energy Bluetooth (LEB) connectivity system.

Thanks to said configuration, it may be possible to establish communication between the set of sensors collecting the information about the vessel and the central monitoring unit which processes and manages said information. A wireless connection between the set of sensors and the central monitoring unit is established through the Low Energy Bluetooth connectivity system.

Another feature of the invention comprises the central monitoring unit being susceptible to increase the set of linked sensors, up to a total number of 16 sensors.

Thanks to said feature, according to the needs of the user, it may be possible to modify the number of sensors being linked to the central monitoring unit, duplicating the number of sensors doing the same task or adding sensors detecting defects different from the above mentioned.

Additionally, it may be remarkable to point out that the multiple services system through sensors having a central monitoring unit has other significant features.

On one hand, the central monitoring unit includes a tracking GPS unit, providing a highly accurate tracking system in the vessel.

On the other hand, the central monitoring unit includes a communication unit to send notifications to a remote user, said device not being independent, and thereby, the system is more compact and easy to use.

Finally, it is significant that said central monitoring unit is able to detect the presence of the mobile devices wherein the user receives the notifications and deactivates the communication unit with said remoter user in this multiple services system through sensors having a central monitoring unit for vessels. Thus, an energy saving from the system is achieved since the moment when the user is in the vessel and cancels all the possible warnings.

### Drawings and references

For a better understanding of the nature of this invention a merely illustrative, non-limiting industrial embodiment is depicted in the appended drawings.
Figure 1 shows a diagram of the communications between the vessel and the remote user (10).
Figure 2 shows a diagram of the connectivity between the central monitoring unit and the set of sensors installed in the vessel.
   1. - Multiple services system
   2. - Central monitoring unit (CORE)
   3. - Set of sensors
   4. - Sensor for water detection in the bilge
   5. - Sensor for the level of battery charge
   6. - Sensor for the state of charge of external current
   7. - Sensor for smoke detection
   8. - Sensor for gas detection
   9. - Sensor for presence
   10. - Remote user
   11. - Station of warnings

### Statement of a preferred embodiment

Referring to the drawings and references listed hereinbefore, a preferred mode to carry out the object of the invention is illustrated in the appended planes, referred to a multiple services system through sensors having a central monitoring unit for vessels, comprising a central monitoring unit (2) and a set of sensors (3) connected to each other in a wireless way and being susceptible to establish communication through the central monitoring unit (2) with a remote user (10).

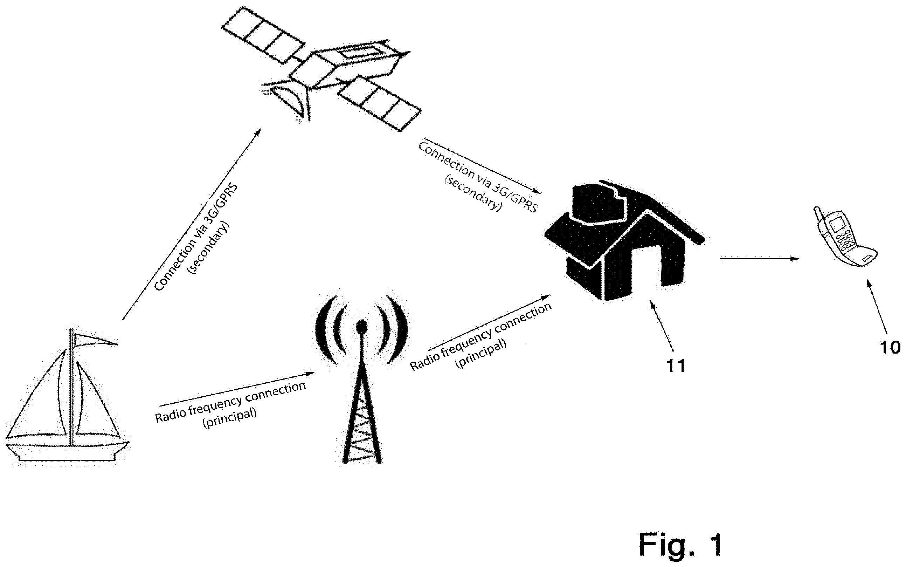

Figure 1 depicts the communication network between the vessel and the remote user (10) placed in a location different from the vessel. The central monitoring unit (2) collects and manages the information received from the set of sensors (3) located in different areas of the vessel with a set up frequency. Once said information is processed, the central monitoring unit (2) sends it to the stations of warnings (11), classifying the anomalous or unusual situations in said vessel, to inform the user of the vessel through SMS, email or PUSH notifications.

The main media used to establish connection between the station of warnings (11) and the vessel is radiofrequency. This media may not be always available due to the lack of coverage in certain areas. Accordingly, in order to assure a permanent connection with the station of warnings, the central monitoring unit (2) has a multi-operator SIM card to guarantee the delivery of the information received by the set of sensors (3) via 3G/GPRS, which is activated when the communication through radiofrequency is not available. A connection may be established with different telephone operators through a multi-operator SIM card. In the case the area where the vessel is located has no radiofrequency or mobile coverage, the central monitoring unit (2) is susceptible to store the last 50 packages of information for the subsequent delivery.

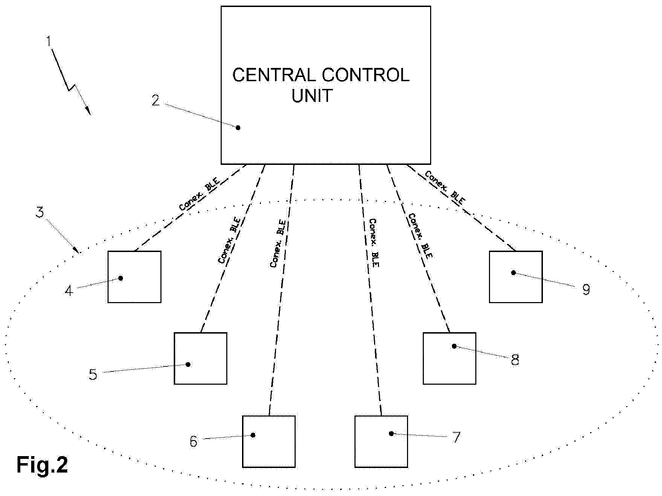

Figure 2 shows the connectivity network between the central monitoring unit (2) and the set of sensors (3), comprising a sensor for water detection in the bilge (4), a sensor for the level of battery charge (5), a sensor for the level of current (6), a sensor for smoke detection (7), a sensor for gas detection (8) and/or a sensor for presence (9) in a preferred embodiment.

The set of sensors (3) is designed to work in a "star" way, such that all of them are connected to the central monitoring unit (2). Said connectivity is achieved through the Low Energy Bluetooth (LEB) system, having a low energy consumption and a range sufficient to detect the set of sensors (3) spread in the vessel.

The use of the Low Energy Bluetooth system provides a set of sensors (3) being connected to the central monitoring unit (2) in a wireless way. This feature makes the implementation easier and reduces the costs thereof, and it allows the transport of the multiple services system (1) to another vessel or other type of vehicle.

## Claims

1. A multiple services system through sensors having a central monitoring unit for vessels, **characterized by** the central monitoring unit (2) and the set of sensors (3) being connected to each other in a wireless way, and being susceptible to establish communication through the central monitoring unit (2) with a remote user (10).

2. The multiple services system through sensors having a central monitoring unit for vessels, according to claim 1, **characterized by** the set of sensors (3) including at least a sensor for water detection in the bilge (4), a sensor for the level of battery charge (5), a sensor for the level of current (6), a sensor for smoke detection (7), a sensor for gas detection (8) and/or a sensor for presence (9).

3. The multiple services system through sensors having a central monitoring unit for vessels, according to claims 1 and 2, **characterized by** the transmission of data between the central monitoring unit (2) and a remote user which (10) may be achieved through the communication by radiofrequency or communication via 3G/GPRS.

4. The multiple services system through sensors having a central monitoring unit for vessels, according to claims 1, 2 and 3, **characterized by** the central monitoring unit (2) being susceptible to be linked to the set of sensors (3) through the Low Energy Bluetooth (LEB) connectivity system.

5. The multiple services system through sensors having a central monitoring unit for vessels, according to claims 1, 2, 3 and 4, **characterized by** the central monitoring unit (2) being susceptible to increase the number of sensors (3) being linked thereto up to a total number of 16.
